# EUROPEAN PATENT APPLICATION

(11) **EP 1 473 880 A2**
(43) Date of publication of application: **03.11.2004**
(21) Application number: 04010115.6
(22) Date of filing: 28.04.2004
(51) Int. Cl.: H04L 12/28, H04Q 7/38

(54) **Method for setting sleep interval in a broadband wireless access communication system**

(30) Priority: 29.04.2003 KR 2003027233
(71) Applicant: Samsung Electronics Co., Ltd., Suwon-si, Gyeonggi-do (KR)
(72) Inventor: Kim, So-Hyun, c/o Samsung Elec. Co., Ltd., Suwon-si, Gyeonggi-do (KR); Koo, chang-Hoi, c/o Samsung Elec. Co., Ltd., Suwon-si, Gyeonggi-do (KR); Son, Yeong-Moon, c/o Samsung Elec. Co., Ltd., Suwon-si, Gyeonggi-do (KR); Son, Jung-Je, c/o Samsung Elec. Co., Ltd., Suwon-si, Gyeonggi-do (KR)
(74) Representative: Grünecker, Kinkeldey, Stockmair & Schwanhäusser Anwaltssozietät

(57) **Abstract**

A broadband wireless access communication system having a sleep mode in which there is no data to be transmitted or received to/from a base station by a subscriber station, and an awake mode in which there is data to be transmitted or received to/from the base station by the subscriber station. The subscriber station sets a next sleep mode after a sleep interval between a start time of the sleep mode and a start time of the awake mode has reached a given maximum window value. The subscriber station receives a traffic indication message indicating absence of data to be transmitted from the base station after the start time of the awake mode; transmits a sleep request message to the base station; receives a response message to the sleep request message from the base station; and then operates in the next sleep mode.

## Description

### BACKGROUND OF THE INVENTION

### 1. Field of the Invention

The present invention relates generally to a broadband wireless access communication system, and in particular, to a method for controlling a sleep mode and an awake mode in a broadband wireless access communication system employing Orthogonal Frequency Division Multiplexing (OFDM).

### 2. Description of the Related Art

In a 4^{th} generation (4G) communication system, active research is being conducted on technology for providing users with services guaranteeing various qualities of service (QoSs) at a data rate of about 100 Mbps.

The current 3^{rd} generation (3G) communication system generally supports a data rate of about 384 Kbps in an outdoor channel environment having a relatively poor channel environment, and only supports a data rate of a maximum of 2 Mbps even in an indoor channel environment having a relatively good channel environment. Meanwhile, a wireless local area network (LAN) system and a wireless metropolitan area network (MAN) system generally support a data rate of 20 Mbps to 50 Mbps.

Therefore, in the current 4G communication system, active research is being carried out on a new communication system securing mobility and QoS for the wireless LAN system and the wireless MAN system supporting a relatively high data rate in order to support the high-speed services that the 4G communication system aims to provide.

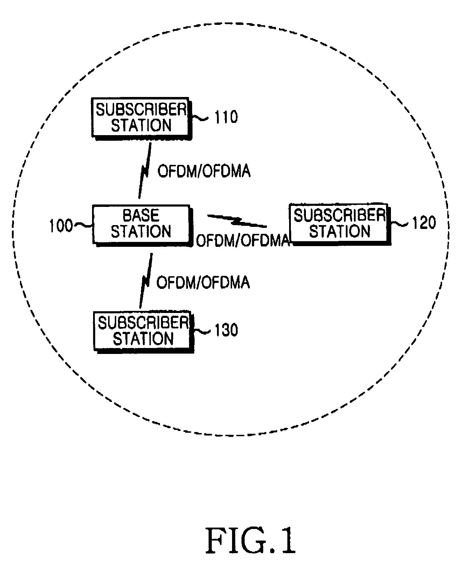

Due to its broad service coverage and high data rate, the wireless MAN system is suitable for high-speed communication services. However, because the mobility of a user, or a subscriber station (SS), is not taken into consideration, handoff caused by fast movement of the subscriber station is also not considered in the system. With reference to FIG. 1, a description will now be made of a configuration of an IEEE 802.16a communication system specified in the wireless MAN standard.

FIG. 1 is a diagram schematically illustrating a configuration of a broadband wireless access communication system employing Orthogonal Frequency Division Multiplexing (OFDM)/Orthogonal Frequency Division Multiple Access (OFDMA) (hereinafter referred to as "OFDM/OFMDA broadband wireless access communication system"), an IEEE 802.16a communication system.

Before a description of FIG. 1 is given, it should be noted that the wireless MAN system is a broadband wireless access (BWA) communication system, and has broader service coverage and supports a higher data rate as compared with the wireless LAN system. The IEEE 802.16a communication system refers to a communication system employing OFDM and OFDMA in order to support a broadband transmission network to a physical channel of the wireless MAN system.

That is, the IEEE 802.16a communication system is an OFDM/OFDMA broadband wireless access communication system. The IEEE 802.16a communication system, applying OFDM/OFDMA to the wireless MAN system, transmits a physical channel signal using a plurality of subcarriers, making it possible to support high-speed data communication.

It should be noted that an IEEE 802.16e communication system considers mobility of a subscriber station in addition to characteristics of the IEEE 802.16a communication system. However, at the present time no specification has been proposed for the IEEE 802.16e communication system. Because the IEEE 802.16e communication system takes mobility of a subscriber station into account as stated above, it will be assumed herein that the subscriber station (SS) is a mobile station (MS) or a mobile subscriber station (MSS). That is, the MS or MSS is an SS to which mobility is given.

As a result, the IEEE 802.16a communication system and the IEEE 802.16e communication system are both an OFDM/OFDMA broadband wireless access communication system. Referring to FIG. 1, the IEEE 802.16a communication system has a single-cell configuration, and is comprised of a base station (BS) 100 and a plurality of subscriber stations (SSs) 110, 120 and 130 controlled by the base station 100. Signal exchange between the base station 100 and the subscriber stations 110, 120 and 130 is achieved using OFDM/OFDMA technology.

As stated above, the IEEE 802.16a communication system currently considers only a state in which subscriber stations are fixed, i.e., considers only a single-cell configuration. However, as described above, the IEEE 802.16e communication system considers mobility of a subscriber station in addition to characteristics of the IEEE 802.16a communication system. Therefore, the IEEE 802.16e communication system considers mobility of a subscriber station in a multicell environment. In order to consider the mobility of a subscriber station in a multicell environment, inevitably operations of the subscriber station and a base station must be modified. However, the IEEE 802.16e communication system has not proposed any method for taking the multicell environment and the mobility of a subscriber station into consideration.

Meanwhile, in the IEEE 802.16e communication system, when mobility of a subscriber station is taken into consideration, power consumption of the subscriber station becomes an important factor for the entire system. Therefore, a sleep mode operation and a corresponding awake mode operation between a subscriber station and a base station for minimizing the power consumption of the subscriber station have been proposed.

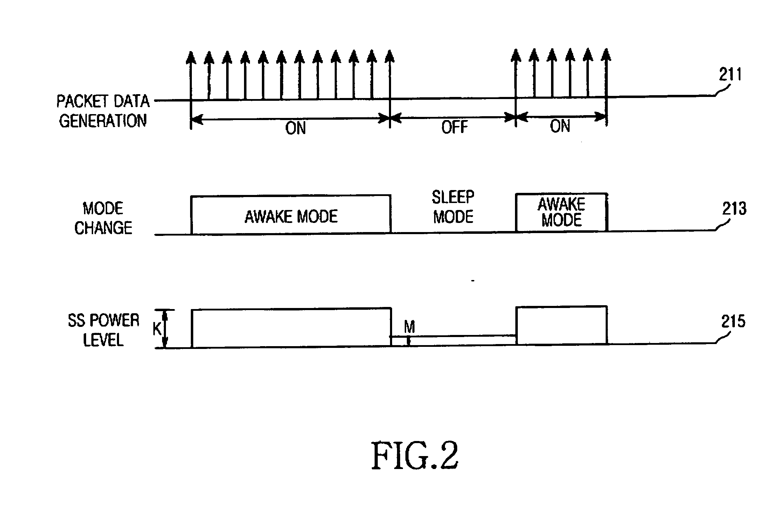

With reference to FIG. 2, a description will now be made of a sleep mode operation currently proposed in the IEEE 802.16e communication system.

FIG. 2 is a diagram schematically illustrating a sleep mode operation proposed in an IEEE 802.16e communication system. Before a description of FIG. 2 is given, it should be noted that the sleep mode has been proposed to minimize power consumption of a subscriber station in an idle interval where no packet data is transmitted. That is, in the sleep mode, a subscriber station and a base station simultaneously make a state transition to the sleep mode in order to minimize power consumption of the subscriber station in an idle interval where no packet data is transmitted.

Because packet data is typically generated on a burst basis, it is unreasonable to consider an interval where the packet data is not transmitted as being identical in operation to an interval where the packet data is transmitted. This is the reason why the sleep mode has been proposed.

In contrast, if transmission packet data is generated while the base station and the subscriber station are in the sleep mode, both the base station and the subscriber station should simultaneously make a state transition to an awake mode to transmit and receive packet data.

Such a sleep mode operation has been proposed as a plan for minimizing not only power consumption but also interference between channel signals. However, because a characteristic of the packet data is mainly affected by traffic, the sleep mode operation must be adaptively performed in consideration of a characteristic and a transmission scheme of the packet data.

Referring to FIG. 2, reference numeral 211 denotes a pattern of packet data generated, and the data pattern is comprised of a plurality of ON intervals and OFF intervals. The ON intervals are burst intervals where packet data, or traffic, is generated, while the OFF intervals are idle intervals where no traffic is generated. The subscriber station and the base station make a state transition to a sleep mode and an awake mode according to such a traffic generation pattern, thereby minimizing power consumption of the subscriber station and reducing interference between channel signals.

Further, reference numeral 213 denotes a state transition (or mode change) pattern of a base station and a subscriber station, and the state transition pattern is comprised of a plurality of awake modes and sleep modes. The awake modes refer to states in which traffic is actually generated, and in these states, actual packet data transmission/reception between a base station and a subscriber station is performed. In contrast, the sleep modes refer to states in which no traffic is generated, and in these states, actual packet data transmission/reception between a base station and a subscriber station is not performed.

Reference numeral 215 denotes a pattern of a power level of a subscriber station (SS POWER LEVEL), and as illustrated, if a power level of the subscriber station for the awake mode is defined as 'K', a power level of the subscriber station for the sleep mode becomes 'M'. Comparing the power level K of the subscriber station for the awake mode with the power level M of the subscriber station for the sleep mode, the M value is much smaller than the K value. That is, in the sleep mode, minimum power is consumed because transmission/reception of packet data is not performed.

A description will now be made of schemes currently proposed in the IEEE 802.16e communication system in order to support the sleep mode operation, which includes the following preconditions.

In order to make a state transition to a sleep mode, a subscriber station must receive a state transition approval from a base station, and the base station should be able to perform an operation of buffering or dropping transmission packet data when permitting the subscriber station to make a state transition to a sleep mode.

In addition, the base station must inform the subscriber station of existence of transmission packet data for a listening interval of the subscriber station, and at this point, the subscriber station must awaken from a sleep mode and determine whether there is packet data to be transmitted from the base station to the subscriber station itself. A detailed description of the "listening interval" will be made below.

If it is determined that there is packet data to be transmitted from the base station to the subscriber station itself, the subscriber station makes a state transition to the awake mode to receive packet data from the base station. In contrast, if it is determined that there is no packet data to be transmitted from the base station to the subscriber station itself, the subscriber station returns to the sleep mode.

A description will now be made of parameters necessary for supporting the sleep mode and awake mode operations.

### (1) Sleep Interval

The sleep interval is requested by a subscriber station, and assigned by a base station at the request of the subscriber station. The sleep interval represents a time interval from a time when the subscriber station has made a state transition to a sleep mode to a time when it makes a state transition back to an awake mode. As a result, the sleep interval is defined as a time for which the subscriber station stays in a sleep mode.

The subscriber station can continuously stay in a sleep mode even after the sleep interval. In this case, the subscriber station updates the sleep interval by performing an exponentially increasing algorithm using a predetermined minimum window (MIN-WINDOW) and maximum window (MAX-WINDOW).

Here, the minimum window value represents a minimum value of the sleep interval, while the maximum window value represents a maximum value of the sleep interval. In addition, the minimum window value and the maximum window value are represented by the number of frames, and both are assigned by a base station. These values will be described below.

### (2) Listening Interval

The listening interval is requested by a subscriber station, and assigned by a base station at the request of the subscriber station. The listening interval represents a time interval for which the subscriber station receives downlink messages, such as a traffic indication (TRF_IND) message, in synchronism with a downlink signal from the base station after it has awakened from a sleep mode for a short period of time.

Here, the traffic indication message is a traffic message to be transmitted to the subscriber station (i.e., a message indicating the presence of packet data), and a detailed description thereof will be made below. The subscriber station determines whether to stay in the awake mode or make a state transition back to the sleep mode, according to a value of the traffic indication message.

### (3) Sleep Interval Update Algorithm

If the subscriber station makes a state transition to a sleep mode, it determines a sleep interval by considering a predetermined minimum window value as a minimum sleep mode cycle. After a lapse of the sleep interval, the subscriber station awakens from the sleep mode for the listening interval to determine whether there is packet data to be transmitted from the base station. If it is determined that there is no packet data to be transmitted from the base station, the subscriber station sets the sleep interval to a value two times longer than a previous sleep interval, and continuously stays in the sleep mode.

For example, if the minimum window value is '2', the subscriber station sets the sleep interval to 2 frames, and then stays in a sleep mode for the 2 frames. After a lapse of the 2 frames, the subscriber station awakens from the sleep mode and determines whether the traffic indication message is received.

If it is determined that the traffic indication message is not received, i.e., if it is determined that there is no packet data transmitted from the base station to the subscriber station, the subscriber station sets the sleep interval to 4 frames (two times the 2 frames), and then stays in a sleep mode for the 4 frames.

In this way, the sleep interval is increased from the minimum window value up to the maximum window value, and an algorithm for updating the sleep interval becomes the sleep interval update algorithm.

A description will now be made of messages currently defined in the IEEE 802.16e communication system which support the sleep mode and awake mode operations.

### (1) Sleep Request (SLP_REQ) Message

The sleep request message is transmitted from a subscriber station to a base station, and used by the subscriber station in making a state transition request to a sleep mode. The sleep request message includes parameters, or information elements (IEs), needed by the subscriber station to operate in a sleep mode, and the sleep request message has a format illustrated in Table 1 below.

**Table 1**

| SYNTAX | SIZE | NOTES |
|---|---|---|
| SLP-REQ_MESSAGE_FORMAT() { | | |
| MANAGEMENT MESSAGE TYPE = 45 | 8 bits | |
| MIN-WINDOW | 6 bits | |
| MAX-WINDOW | 10 bits | |
| LISTENING INTERVAL | 8 bits | |
| } | | |

The sleep request message is a dedicated message which is transmitted on the basis of a connection ID (CID) of a subscriber station, and each of the information elements of the sleep request message shown in Table 1 will be described herein below.

MANAGEMENT MESSAGE TYPE is information indicating a type of a current transmission message, and MANAGEMENT MESSAGE TYPE = 45 indicates the sleep request message.

A value of MIN-WINDOW indicates a start value requested for the sleep interval (measured in frames), while a value of MAX-WINDOW indicates a stop value requested for the sleep interval (measured in frames). That is, as described in connection with the sleep interval update algorithm, the sleep interval can be updated within a value between the minimum window (MIN-WINDOW) value and the maximum window (MAX-WINDOW) value.

LISTENING INTERVAL indicates a requested listening interval (measured in frames). The LISTENING INTERVAL is also represented by a frame value.

### (2) Sleep Response (SLP_RSP) Message

The sleep response message is a response message to the sleep request message, and is used as a message indicating whether to approve or deny a state transition to a sleep mode requested by the subscriber station, or used as a message indicating an unsolicited instruction.

A detailed description of the sleep response message used as a message indicating the unsolicited instruction will be made later on. The sleep response message includes information elements needed by the subscriber station to operate in a sleep mode, and the sleep response message has a format shown in Table 2 below.

**Table 2**

| SYNTAX | SIZE | NOTES |
|---|---|---|
| SLP-RSP_MESSAGE_FORMAT() { | | |
| MANAGEMENT MESSAGE TYPE = 46 | 8 bits | |
| SLEEP-APPROVED | 1 bit | 0: SLEEP-MODE REQUEST DENIED 1: SLEEP-MODE REQUEST APPROVED |
| IF(SLEEP-APPROVED = 0) { | | |
| RESERVED | 7 bits | |
| } ELSE { | | |
| START-TIME | 7 bits | |
| MIN-WINDOW | 6 bits | |
| MAX-WINDOW | 10 bits | |
| LISTENING INTERVAL | 8 bits | |
| } | | |
| } | | |

The sleep response message is also a dedicated message which is transmitted on the basis of a connection ID of the subscriber station, and each of the information elements of the sleep response message shown in Table 2 will be described herein below.

MANAGEMENT MESSAGE TYPE is information indicating a type of a current transmission message, and MANAGEMENT MESSAGE TYPE = 46 indicates the sleep response message.

A value of SLEEP-APPROVED is expressed with 1 bit, and SLEEP-APPROVED = 0 indicates that a transition request to a sleep mode is denied (SLEEP-MODE REQUEST DENIED), while SLEEP-APPROVED = 1 indicates that a transition request to a sleep mode is approved (SLEEP-MODE REQUEST APPROVED). Meanwhile, for SLEEP-APPROVED = 0, there is a 7-bit RESERVED field, and for SLEEP-APPROVED = 1, there are a 7-bit START-TIME field, a 6-bit MIN-WINDOW field, a 10-bit MAX-WINDOW field and an 8-bit LISTENING INTERVAL field.

Here, a value of START-TIME indicates the number of frames required until the subscriber station enters a first sleep interval, excluding a frame for which the sleep response message was received. That is, the subscriber station makes a state transition to a sleep mode after a lapse of frames corresponding to the START-TIME value beginning at the next frame of the frame for which the sleep response message was received.

A value of MIN-WINDOW indicates a start value for the sleep interval (measured in frames), while a value of MAX-WINDOW indicates a stop value for the sleep interval (measured in frames). LISTENING INTERVAL indicates a value for LISTENING INTERVAL (measured in frames).

### (3) Traffic Indication (TRF_IND) Message

The traffic indication message is transmitted to a subscriber station by a base station for the listening interval, and is used to indicate the presence of packet data to be transmitted to the subscriber station by the base station. The traffic indication message has a format shown in Table 3 below.

**Table 3**

| SYNTAX | SIZE | NOTES |
|---|---|---|
| TRF-IND_MESSAGE_FORMAT() { | | |
| MANAGEMENT MESSAGE TYPE = 47 | 8 bits | |
| POSITIVE_INDICATION_LIST() { | | TRAFFIC HAS BEEN ADDRESSED TO THE SS |
| NUM-POSITIVE | 8 bits | |
| for (i=0; i< NUM-POSITIVE; i++) { | | |
| CID | 16 bits | BASIC CID OF THE SS |
| } | | |
| } | | |
| } | | |

The traffic indication message, unlike the sleep request message and the sleep response message, is a broadcasting message transmitted on a broadcasting basis. The traffic indication message is a message indicating the presence/absence of packet data to be transmitted from the base station to a particular subscriber station, and the subscriber station decodes the broadcasted traffic indication message for the listening interval and determines whether to make a state transition to an awake mode or to hold the sleep mode.

If the subscriber station determines to make a state transition to an awake mode, the subscriber station analyzes frame synchronization. If the analyzed frame sequence number is not identical to an expected frame sequence number, the subscriber station can make a retransmission request for lost packet data in the awake mode. Otherwise, if the subscriber station fails to receive the traffic indication message for the listening interval, or if the traffic indication message, though it is received, does not include POSITIVE INDICATION, the subscriber station returns to the sleep mode.

Each of the information elements of the traffic indication message shown in Table 3 will be described herein below. MANAGEMENT MESSAGE TYPE is information indicating a type of a current transmission message, and MANAGEMENT MESSAGE TYPE = 47 indicates the traffic indication message. POSITIVE_INDICATION_LIST includes the number NUM-POSITIVE of positive subscribers, and a connection ID (CID) of each of the positive subscribers. That is, the POSITIVE_INDICATION_LIST indicates the number of subscribers to which packet data is to be transmitted, and their connection IDs.

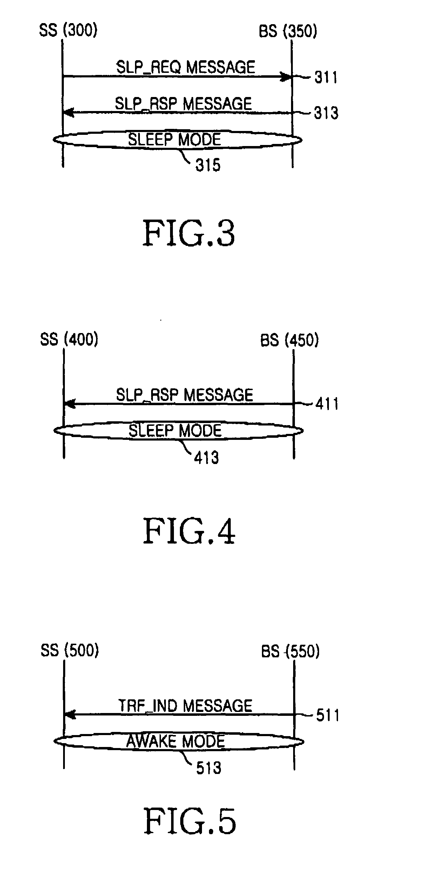

FIG. 3 is a signal flow diagram illustrating a procedure for making a state transition to a sleep mode by a subscriber station at the request of the subscriber station, proposed in an IEEE 802.16e communication system.

Referring to FIG. 3, a subscriber station 300 transmits a sleep request message to a base station 350 when it desires to make a state transition to a sleep mode at Step 311. The sleep request message includes the information elements described in connection with Table 1. Upon receiving the sleep request message from the subscriber station 300, the base station 350 determines whether to permit the subscriber station 300 to make a state transition to a sleep mode, taking the current conditions of the subscriber station 300 and the base station 350 into consideration, and transmits a sleep response message to the subscriber station 300 according to the determination result at Step 313.

Here, the base station 350 determines whether to permit the subscriber station 300 to make a state transition to a sleep mode, taking the presence/absence of packet data to be transmitted to the subscriber station 300 into consideration. As described in conjunction with Table 2, if the base station 350 determines to approve a state transition to a sleep mode, it sets SLEEP-APPROVED to '1', whereas if the base station 350 determines to deny a state transition to a sleep mode, it sets SLEEP-APPROVED to '0'. The information elements included in the sleep response message are illustrated in Table 2.

Upon receiving the sleep response message from the base station 350, the subscriber station 300 analyzes a value of SLEEP-APPROVED included in the received sleep response message, and if it is analyzed that the subscriber station 300 is permitted to make a state transition to a sleep mode, the subscriber station 300 makes a state transition to a sleep mode at Step 315. However, if a value of SLEEP-APPROVED included in the sleep response message indicates a denial of a state transition to a sleep mode, the subscriber station 300 holds a current mode, i.e., an awake mode.

In addition, as it makes a state transition to a sleep mode, the subscriber station 300 reads corresponding information elements from the sleep response message and performs a corresponding sleep mode operation.

FIG. 4 is a signal flow diagram illustrating a procedure for making a state transition to a sleep mode by a subscriber station under the control of a base station, proposed in an IEEE 802.16e communication system.

Before a description of FIG. 4 is given, it should be noted that the IEEE 802.16e communication system proposes a method of using the sleep response message as a message indicating an unsolicited instruction. Here, the "unsolicited instruction" means that a subscriber station operates under the instruction, or control, of a base station even though there is no separate request from the subscriber station, and in an example of FIG. 4, the subscriber station makes a state transition to a sleep mode according to the unsolicited instruction.

Referring to FIG. 4, a base station 450 transmits a sleep response message to a subscriber station 400 at Step 411. The sleep response message includes the information elements described in conjunction with Table 2. Upon receiving the sleep response message from the base station 450, the subscriber station 400 analyzes a value of SLEEP-APPROVED included in the received sleep response message, and if the value of SLEEP-APPROVED indicates an approval of a state transition to a sleep mode, the subscriber station 400 makes a state transition to a sleep mode at Step 413.

In FIG. 4, because the sleep response message is used as an unsolicited instruction message, the SLEEP-APPROVED value is expressed only with '1'. In addition, as it makes a state transition to a sleep mode, the subscriber station 400 reads corresponding information elements from the sleep response message and performs a corresponding sleep mode operation.

FIG. 5 is a signal flow diagram illustrating a procedure for making a state transition to an awake mode by a subscriber station under the control of a base station, proposed in an IEEE 802.16e communication system.

Referring to FIG. 5, if traffic, or packet data, to be transmitted to a subscriber station 500 is generated, a base station 550 transmits a traffic indication message to the subscriber station 500 at Step 511.

Here, the traffic indication message includes the information elements described in connection with Table 3. Upon receiving the traffic indication message from the base station 550, the subscriber station 500 determines whether POSITIVE INDICATION exists in the traffic indication message. If the POSITIVE INDICATION exists, the subscriber station 500 reads a connection ID included in the traffic indication message and determines whether the read connection ID is identical to its own connection ID.

If it is determined that the connection ID included in the traffic indication message is identical to its own connection ID, the subscriber station 500 makes a state transition from the current mode, i.e., sleep mode, to an awake mode at Step 513.

So far, a description has been made above of sleep mode operations proposed in the current IEEE 802.16e communication system. Next, drawbacks of the above-described sleep mode operations will be described herein below.
(1) Packet data transmitted in a network may suffer a transmission delay due to jittering and node buffering, and a base station can allow a subscriber station to make a state transition to a sleep mode for balancing of a network load and an increase in system capacity.
   The current IEEE 802.16e communication system proposes a method in which a base station, as stated above, allows a subscriber station to make a state transition to a sleep mode using an unsolicited instruction message (e.g., a sleep response message). However, because a state transition to a sleep mode by a subscriber station based on the unsolicited instruction message is a unilateral operation of the base station, there is a demand for a response message for the subscriber station.
(2) If an error occurs while a subscriber station is making a state transition from a sleep mode to an awake mode, a fatal loss of packet data may occur due to a buffering problem on a base station side.
   The current IEEE 802.16e communication system, as described above, performs a control operation so that a base station transmits a traffic indication message to a subscriber station and the subscriber station makes a state transition from a sleep mode to an awake mode. However, because the state transition from a sleep mode to an awake mode is also a unidirectional operation of the base station, there is a demand for a response message for the subscriber station.
   A detailed description will now be made of the reason why a response message for the traffic indication message is necessary.
   As transmission packet data is generated, a base station transmits a traffic indication message to a subscriber station, and as it transmits the traffic indication message, the base station determines that the subscriber station has made a state transition from a sleep mode to an awake mode. However, when the subscriber station fails to receive the traffic indication message due to a transmission error, the subscriber station stays in the sleep mode.
   At this point, because the base station determines that the subscriber station has made a state transition to an awake mode, even though the base station has transmitted packet data to the subscriber station, the subscriber station continuously stays in a sleep mode as described above. Therefore, the subscriber station cannot receive packet data transmitted by the base station. As a result, the packet data transmitted by the base station is lost. Therefore, a response message for the traffic indication message transmitted by the base station is required.
(3) When the subscriber station loses a sequence number of received packet data or loses the received packet data after it has made a state transition from a sleep mode to an awake mode, a base station must retransmit the lost packet data to the subscriber station. At this point, in order to determine whether or not the packet data is lost, it is necessary to request retransmission of the lost packet data by performing sequence reordering in a data link layer, and a relative delay caused by retransmission of the packet data occurs causing a reduction in transmission performance of packet data.

Meanwhile, a subscriber station in the sleep mode sets a sleep interval beginning at a minimum window value, and after a lapse of the sleep interval, the subscriber station determines whether there is any packet data to be transmitted to the subscriber station itself based on a traffic indication message transmitted from a base station for a listening interval. If it is determined that there is no packet data to be transmitted to the subscriber station itself as a result of analyzing the traffic indication message for the subscriber station, the subscriber station sets the sleep interval to a value two times longer than a previous sleep interval, and continuously stays in the sleep mode. When there is no packet data to be continuously transmitted while such a procedure is repeated, the sleep interval reaches a maximum window value.

So far, no definition has been given to an operation that the subscriber station must perform when the sleep interval reaches the maximum window value. Therefore, there is a need for an effective plan for the subscriber station or the base station, in which a packet transmission environment is considered when a sleep interval value of the subscriber station reaches the maximum window value.

### SUMMARY OF THE INVENTION

It is, therefore, an object of the present invention to provide a method for setting a sleep interval in a broadband wireless access communication system.

It is another object of the present invention to provide a sleep interval setting method for maintaining a maximum window value when a sleep interval reaches the maximum window value in a broadband wireless access communication system.

It is further another object of the present invention to provide a sleep interval setting method for assigning and applying a previously assigned minimum window value when a sleep interval reaches a maximum window value in a broadband wireless access communication system.

It is yet another object of the present invention to provide a sleep interval setting method for sending a new window value request to a base station and receiving a new window value when a sleep interval reaches a maximum window value in a broadband wireless access communication system.

According to one aspect of the present invention, in a broadband wireless access communication system having a sleep mode in which there is no data to be transmitted or received to/from a base station by a subscriber station, and an awake mode in which there is data to be transmitted or received to/from the base station by the subscriber station, there is provided a method for setting a next sleep mode by the subscriber station after a sleep interval between a start time of the sleep mode and a start time of the awake mode has reached a given maximum window value, the method comprising the steps of: receiving a traffic indication message indicating absence of data to be transmitted from the base station after the start time of the awake mode; transmitting a sleep request message to the base station; receiving a response message to the sleep request message from the base station; and operating in the next sleep mode.

According to another aspect of the present invention, in a broadband wireless access communication system having a sleep mode in which there is no data to be transmitted or received to/from a base station by a subscriber station, and an awake mode in which there is data to be transmitted or received to/from the base station by the subscriber station, there is provided a method for setting a next sleep mode by the subscriber station after a sleep interval between a start time of the sleep mode and a start time of the awake mode has reached a given maximum window value, the method comprising the steps of: receiving a traffic indication message indicating absence of data to be transmitted from the base station after the start time of the awake mode; and setting a sleep interval for the next sleep mode to a maximum window value, and then operating in the next sleep mode.

According to further another aspect of the present invention, in a broadband wireless access communication system having a sleep mode in which there is no data to be transmitted or received to/from a base station by a subscriber station, and an awake mode in which there is data to be transmitted or received to/from the base station by the subscriber station, there is provided a method for setting a next sleep mode by the subscriber station after a sleep interval between a start time of the sleep mode and a start time of the awake mode has reached a given maximum window value, the method comprising the steps of: receiving a traffic indication message indicating absence of data to be transmitted from the base station after the start time of the awake mode; and setting a sleep interval for the next sleep mode to a minimum window value, and then operating in the next sleep mode.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram schematically illustrating a configuration of an OFDM/OFDMA broadband wireless access communication system;
FIG. 2 is a diagram schematically illustrating a sleep mode operation proposed in an IEEE 802.16e communication system;
FIG. 3 is a signal flow diagram illustrating a procedure for making a state transition to a sleep mode by a subscriber station at the request of the subscriber station, proposed in an IEEE 802.16e communication system;
FIG. 4 is a signal flow diagram illustrating a procedure for making a state transition to a sleep mode by a subscriber station under the control of a base station, proposed in an IEEE 802.16e communication system;
FIG. 5 is a signal flow diagram illustrating a procedure for making a state transition to an awake mode by a subscriber station under the control of a base station, proposed in an IEEE 802.16e communication system;

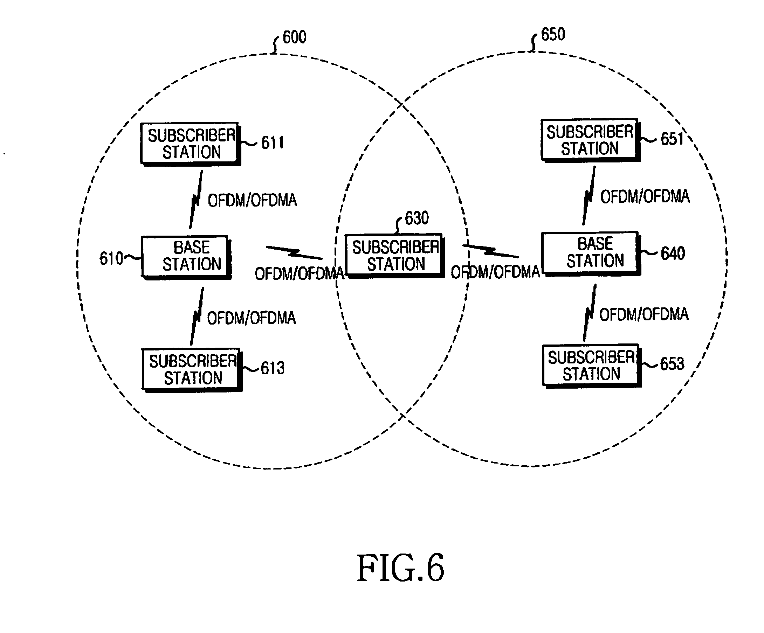

FIG. 6 is a diagram schematically illustrating a configuration of an OFDM/OFDMA broadband wireless access communication system according to an embodiment of the present invention;

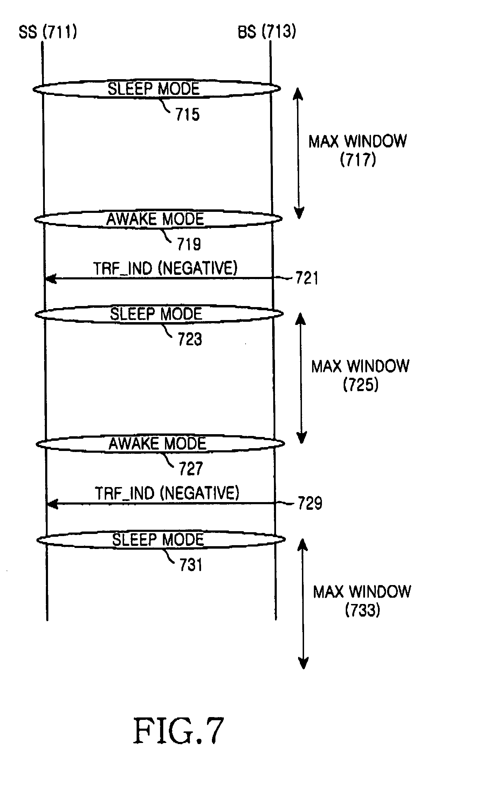

FIG. 7 is a signal flow diagram illustrating a procedure for maintaining a sleep interval at a maximum window value when the sleep interval reaches the maximum window, according to a first embodiment of the present invention;

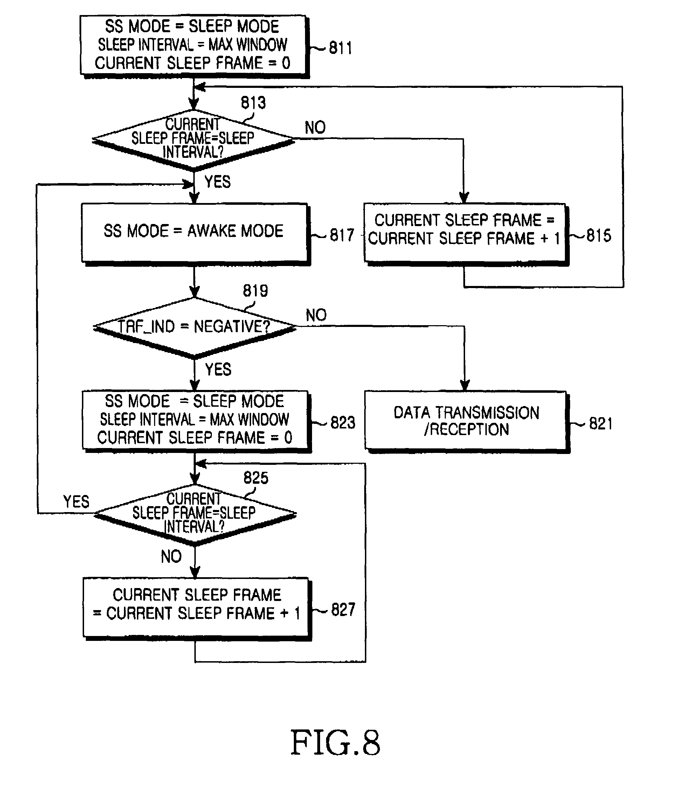

FIG. 8 is a flowchart illustrating a procedure for maintaining a sleep interval at a maximum window value by a subscriber station when the sleep interval reaches the maximum window value, according to the first embodiment of the present invention;

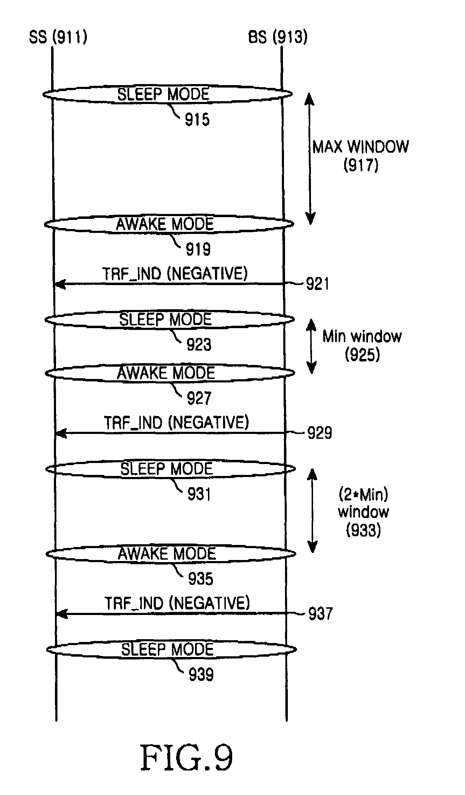

FIG. 9 is a signal flow diagram illustrating a procedure for setting a sleep interval back to a minimum window value when the sleep interval reaches a maximum window value, according to a second embodiment of the present invention;

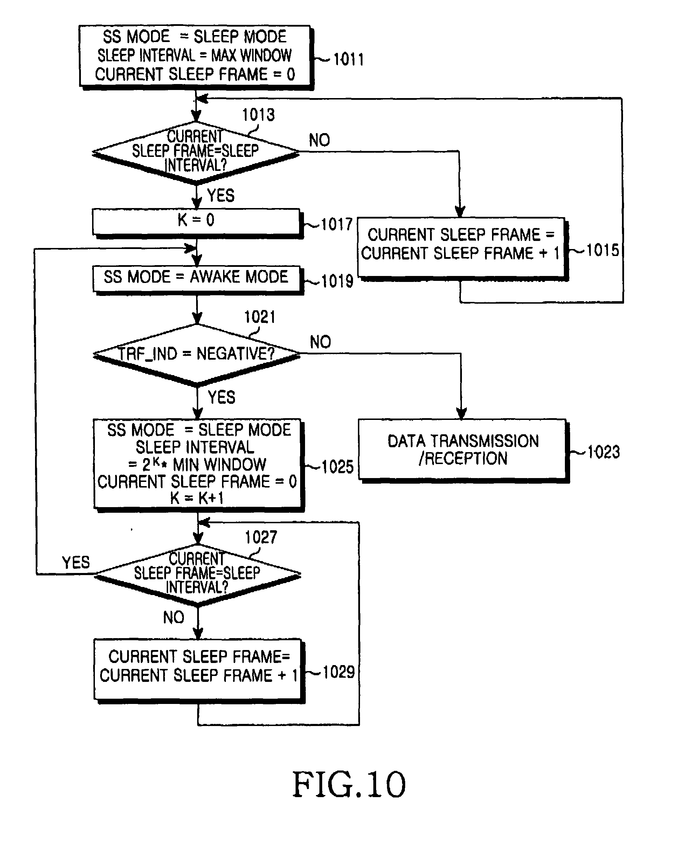

FIG. 10 is a flowchart illustrating a procedure for setting a sleep interval back to a minimum window value by a subscriber station when the sleep interval reaches a maximum window value, according to the second embodiment of the present invention;

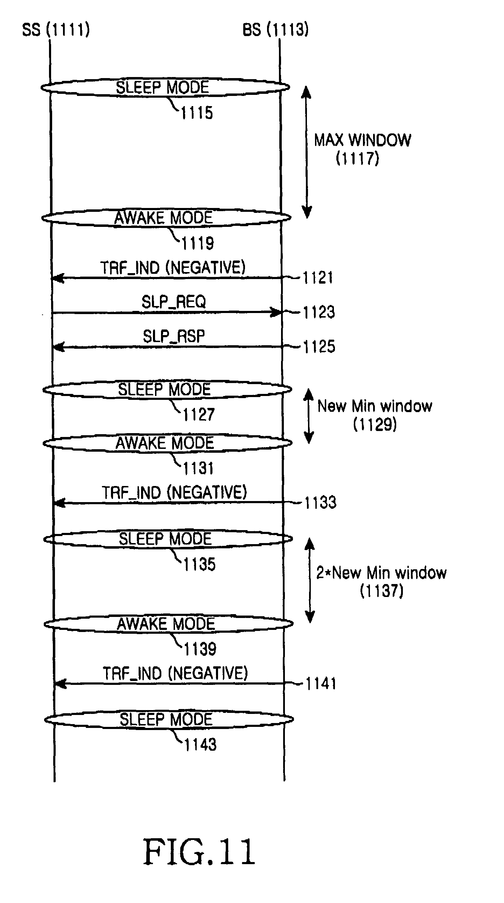

FIG. 11 is a signal flow diagram illustrating a procedure for requesting setting of a new sleep interval when a sleep interval reaches a maximum window value, according to a third embodiment of the present invention; and

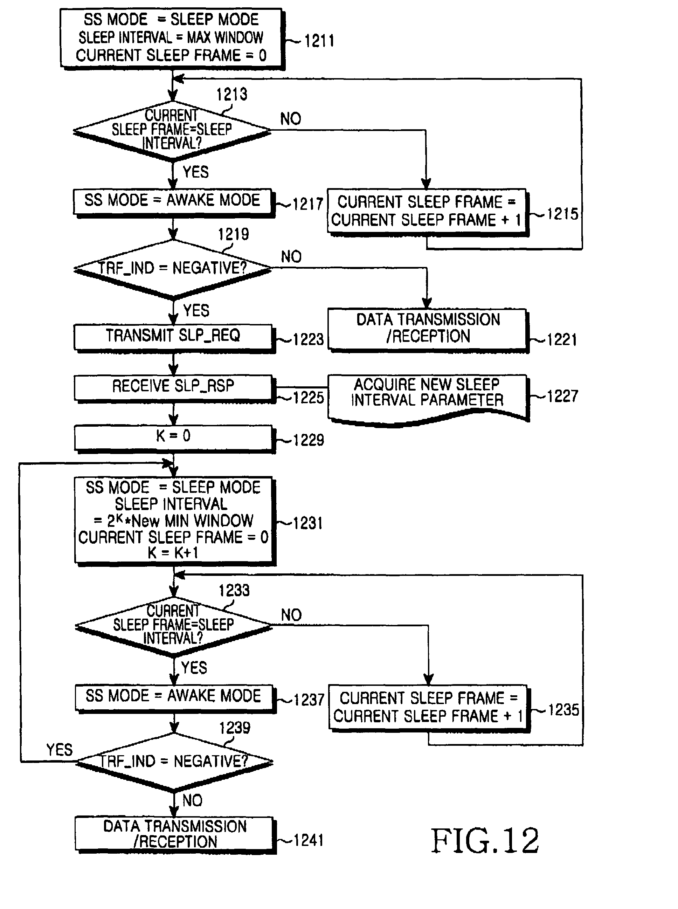

FIG. 12 is a flowchart illustrating a procedure for requesting setting of a new sleep interval by a subscriber station when a sleep interval reaches a maximum window value, according to the third embodiment of the present invention.

### DETAILED DESCRIPTION OF THE PREFERRED EMBODIMENT

Several preferred embodiments of the present invention will now be described in detail with reference to the annexed drawings. In the following description, a detailed description of known functions and configurations incorporated herein has been omitted for conciseness.

FIG. 6 is a diagram schematically illustrating a configuration of an OFDM/OFDMA broadband wireless access communication system according to an embodiment of the present invention.

Before a description of FIG. 6 is given, it should be noted that as stated above, an IEEE 802.16e communication system takes into consideration the mobility of a subscriber station (SS) in addition to characteristics of an IEEE 802.16a communication system, but no specification has been proposed for the communication system. In order to consider mobility of a subscriber station in addition to characteristics of the IEEE 802.16a communication system, the IEEE 802.16e communication system can consider a multicell configuration and handoff of a subscriber station between multiple cells. Therefore, the present invention proposes a configuration of an IEEE 802.16e communication system illustrated in FIG. 6.

The IEEE 802.16e communication system is a broadband wireless access (BWA) communication system employing Orthogonal Frequency Division Multiplexing (OFDM) and Orthogonal Frequency Division Multiple Access (OFDMA) (hereinafter, referred to as "OFDM/OFDMA broadband wireless access communication system"), and for the convenience of explanation, it will be assumed in FIG. 6 that the OFDM/OFDMA broadband wireless access communication system is an example of the IEEE 802.16e communication system.

Referring to FIG. 6, the IEEE 802.16e communication system has a multicell configuration (i.e., has for example a cell 600 and a cell 650), and is comprised of a base station (BS) 610 controlling the cell 600, a base station 640 controlling the cell 650, and a plurality of subscriber stations 611, 613, 630, 651 and 653.

Signal exchange between the base stations 610 and 640 and their associated subscriber stations 611, 613, 630, 651 and 653 is achieved using the OFDM/OFDMA technology. Among the subscriber stations 611, 613, 630, 651 and 653, the subscriber station 630 is located in a boundary region, or a handoff region, between the cell 600 and the cell 650. Therefore, it is necessary to support handoff of the subscriber station 630 in order to support mobility of the subscriber station 630.

As described in connection with FIG. 6, because the IEEE 802.16e communication system considers mobility of a subscriber station in addition to characteristics of the IEEE 802.16a communication system, power consumption of the subscriber station becomes as an important factor for the entire system. Therefore, a sleep mode operation and a corresponding awake mode operation between a subscriber station and a base station for minimizing the power consumption of the subscriber station have been proposed.

However, in the sleep mode operation and the awake mode operation proposed in the current IEEE 802.16e communication system, there is no control method for an operation after a sleep interval reaches a maximum window value.

In accordance with the present invention a method for setting the sleep interval includes a method for continuously maintaining a maximum window value as a value of the sleep interval, and a method for continuously repeating an operation of setting a sleep interval value to a minimum window value and then increasing the sleep interval value up to a maximum window value. In addition, the method for setting the sleep interval can include a method for transmitting a sleep request message for setting a new sleep interval when the sleep interval value reaches a maximum window value.

The present invention provides three embodiments of the method for setting a sleep interval. The three embodiments will be described herein below with reference to FIGs. 7 to 12.

### First Embodiment

As a first embodiment of the present invention, a method for maintaining a sleep interval value at a maximum window (MAX-WINDOW) value will now be described herein below with reference to FIGs. 7 and 8.

Generally, when a subscriber station receives a negative signal in a traffic indication message within a listening interval after transitioning to an awake mode upon expiration of a sleep interval in a sleep mode, the subscriber station transitions back to a sleep mode.

If the subscriber station transitions back to a sleep mode without data transmission/reception after being awakened from the sleep mode, there is a high possibility that there will be no transmission data for the time being. The sleep interval is then increased step by step on a doubling basis to reach a maximum window size previously designated by the base station. Therefore, the first embodiment of the present invention provides a method for continuously maintaining the sleep interval at the maximum window value.

A change in mode between the subscriber station and the base station and a change in sleep interval, based on such a method, are illustrated in FIG. 7.

Referring to FIG. 7, a subscriber station 711 in a sleep mode 715 sets a sleep interval to a maximum window 717, and after a lapse of the maximum window 717, receives a traffic indication message 721 from a base station 713 in an awake mode 719.

Meanwhile, if the subscriber station 711 receives a negative signal through the traffic indication message 721 because there is no data to be transmitted by the base station 713, the subscriber station 711 and the base station 713 transition back to a sleep mode 723. At this point, according to the first embodiment of the present invention, the sleep interval maintains a maximum window 725 of the previous sleep interval.

In the same manner, the subscriber station 711 which transitioned back to the sleep mode 723 transitions to an awake mode 727 after a lapse of the sleep interval (i.e., the maximum window value), and analyzes again a traffic indication message.

If the subscriber station 711 receives a negative signal 729 through the traffic indication message, the subscriber station 711 transitions back to a sleep mode 731, and continuously maintains the sleep interval at the maximum window 733 as described above.

As a result, because the sleep interval has reached the maximum window value set by the base station 713, the sleep interval is no longer increased, and the sleep interval is fixed at the maximum window value until the subscriber station 711 receives a positive signal through a traffic indication message from the base station 713.

FIG. 8 is a flowchart illustrating a processing procedure by the subscriber station 711 according to a first embodiment of the present invention. Referring to FIG. 8, the subscriber station 711 enters a sleep mode after setting a sleep interval to a maximum window value at Step 811. At this point, a current sleep frame is newly set to '0', and the current sleep frame value is increased by one each time a frame sequence number is increased by one at Step 815. The current sleep frame value means a value counted by the frame after the subscriber station 711 has transitioned to the sleep mode. Therefore, the current sleep frame value is counted until it reaches the sleep interval, and then is set back to '0'.

Meanwhile, when the current sleep frame value reaches the sleep interval at Step 813, the subscriber station 711 transitions to an awake mode and receives a signal transmitted by the base station 713 at Step 817.

At this point, the subscriber station 711 can receive a traffic indication message from the base station 713, and the traffic indication message includes information (negative or positive information) indicating the presence/absence of data to be transmitted by the base station 713 to the subscriber station 711.

If there is data to be transmitted by the base station 713 to the subscriber station 711, i.e., if positive information is included in the traffic indication message at Step 819, the subscriber station 711 holds the awake mode and exchanges data with the base station 713 at Step 821.

In contrast, if a negative message is included in the traffic indication message, the subscriber station 711 transitions back to a sleep mode at Step 823. In this state, because the sleep interval value reached the maximum window value, although the subscriber station 711 transitions back to the sleep mode, it maintains the sleep interval at the maximum window value according to the first embodiment of the present invention (Step 823).

Therefore, while the current sleep frame is increased from '0' to the maximum window, the subscriber station 711 holds a sleep mode and continuously maintains the sleep interval at the maximum window value until it receives positive information through a traffic indication message in an awake mode due to the presence of data to be transmitted by the base station 713.

In the same manner, when the current sleep frame value has not reached the sleep interval or the maximum window at Step 825, the subscriber station 711 increases the current sleep frame value by one each time a frame elapses at Step 827. However, when the current sleep frame value has reached the sleep interval, the subscriber station 711 repeats a process of transitioning to an awake mode and analyzing a traffic indication message transmitted from the base station 713.

For example, it will be assumed that a minimum window value is 2 ms, a maximum window value is 5 seconds, and the subscriber station 711 continuously receives negative information through a traffic indication message due to the absence of data to be transmitted from the base station 713. In this case, when a transition initially occurs to a sleep mode, a sleep interval becomes 2 ms, and thereafter, the sleep interval is increased to 4 ms, 8 ms, 16 ms, ..., on a doubling basis. When the sleep interval is increased step by step in this way to reach 5 seconds, the sleep interval is then continuously maintained at 5 seconds.

That is, according to the first embodiment of the present invention, if the subscriber station 711 transitions back to a sleep mode after the sleep interval has reached the maximum window value, the sleep interval continuously maintains the maximum window value.

Such a method can be modified. The modified method can reset the sleep interval if the maximum window value is repeated for a predetermined number of times, instead of continuously setting the sleep interval to the maximum window value.

For example, if the sleep interval is maintained as the maximum window five times after the sleep interval reached the maximum window value, the sleep interval can be reset to a value between the minimum window and the maximum window. This method can be more effective during irregular traffic transmission.

### Second Embodiment

As a second embodiment of the present invention, a method for repeating a process of increasing a sleep interval up to a maximum window value after setting the sleep interval to a minimum window (MIN-WINDOW) value will be described with reference to FIGs. 9 and 10.

When there is no transmission data, a base station transmits a traffic indication message including negative information to a subscriber station, and the subscriber station receiving the message continuously stays in a sleep mode. However, because the data to be transmitted by the base station is not real-time data, the data has a random characteristic in terms of an occurrence frequency.

Therefore, a method for setting a sleep interval back to a minimum window when the sleep interval reaches a maximum window, and then increasing the sleep interval on a doubling basis can be taken into consideration.

FIG. 9 is a diagram illustrating a procedure for setting a sleep interval back to a minimum window value when the sleep interval reaches a maximum window value, according to a second embodiment of the present invention.

It is assumed in FIG. 9 that a subscriber station 911 that has transitioned to a sleep mode has a sleep interval of a maximum window value. Therefore, the subscriber station 911 that has transitioned to a sleep mode 915 transitions to an awake mode 919 after a lapse of the maximum window value 917, and then receives a traffic indication message 921 from a base station 913. As stated above, the traffic indication message transmitted by the base station 913 includes positive or negative information indicating the presence/absence of transmission data.

If the subscriber station 911 detects negative information from the traffic indication message received in the awake mode, the subscriber station 911 transitions back to a sleep mode 923. In this case, a sleep interval of the subscriber station 911 must be set, and the second embodiment of the present invention provides a method for setting the sleep interval back to a minimum window value after the sleep interval reaches a maximum window value. Because the maximum window and minimum window values are previously determined and stored by the base station 913 as stated above, the subscriber station 911 previously knows these values.

Therefore, when the subscriber station 911 transitions back to a sleep mode after the sleep interval has reached the maximum window value, the sleep interval is reset to the minimum window value that the subscriber station 911 already knows 925. When the sleep interval is reset to the minimum window value and a transition occurs to a sleep mode 923, the subscriber station 911 holds the sleep mode for the minimum window value 925. After a lapse of a time of the minimum window value, the subscriber station 911 transitions to an awake mode 927 and analyzes a traffic indication message transmitted by the base station 913 at 929.

If negative information is included in the received traffic indication message, a transition occurs back to a sleep mode 931 because there is no data to be transmitted from the base station 913. In this case, the sleep interval is set to a value (2*MIN-WINDOW) which is two times the minimum window value or the previous sleep interval at 933.

When the sleep interval is set to a value which is two times the minimum window value and a transition takes place to a sleep mode 931, the subscriber station 911 holds the sleep mode for a time corresponding to the value which is two times the minimum window value 933. After a lapse of a time of the value which is two times the minimum window value, the subscriber station 911 transitions to an awake mode 935 and analyzes a traffic indication message transmitted from the base station 913 at 937.

In the same manner, when negative information is included in the traffic indication message, a transition occurs back to a sleep mode 939 and the procedure is repeated. Likewise, when the sleep mode is held after a lapse of the sleep interval, the sleep interval is increased 4 times, 8 times and 16 times the minimum window value. As a result, the second embodiment repeats a process of resetting the sleep interval back to the minimum window value if positive information is not received from the base station 913 until the sleep interval is increased step by step to reach the maximum window value.

FIG. 10 is a flowchart illustrating an operation performed by a subscriber station according to a second embodiment of the present invention. Referring to FIG. 10, a process performed until an initial sleep interval reaches a maximum window is identical to a corresponding process described in connection with FIG. 8. That is, when a sleep interval of the subscriber station 911 in a sleep mode is set to a maximum window value at Step 1011, a current sleep frame value is increased by one from '0' to the maximum window value each time a frame elapses, at Steps 1013 and 1015.

When the current sleep frame value is increased to reach the sleep interval (or maximum window value), the subscriber station 911 transitions to an awake mode at Step 1019 and analyzes a traffic indication message received from the base station 913.

If positive information is included in the received traffic indication message as a result of the analysis, it means that there is data to be transmitted from the base station 913. In this case, the subscriber station 911 performs data communication with the base station 913 at Step 1023.

In contrast, if negative information is included in the received traffic indication message, the subscriber station 911 transitions back to a sleep mode and resets the sleep interval. Because the previous sleep interval was set to the maximum window value, the next sleep interval is set to a minimum window value as stated above according to the second embodiment of the present invention.

A value K in step 1017 is a variable which is set to increase the sleep interval on a doubling basis each time the sleep mode is repeated, according to an embodiment of the present invention. Therefore, after the value K is initially set to '0', the value K is increased by one each time the sleep interval is repeated. As a result, the sleep interval is increased 2 times, 4 times and 8 times the minimum window value at Step 1025.

If the current sleep frame value is increased by one at Step 1029 each time a frame elapses to reach a sleep interval at Step 1027, the subscriber station 911 transitions to an awake mode and receives a traffic indication message from the base station 913 at Step 1019. If negative information is included in the received traffic indication message, the subscriber station 911 increases the sleep interval step by step on a doubling basis. If the sleep interval is continuously increased to reach the maximum window value, the subscriber station 911 resets the sleep interval back to the minimum window value and then repeats the above process.

For example, it will be assumed that a minimum window value is 2 ms, a maximum window value is 5 seconds, and the subscriber station 911 continuously receives negative information through a traffic indication message due to the absence of data to be transmitted from the base station 913. In this case, when a transition initially occurs to a sleep mode, a sleep interval becomes 2 ms, and thereafter, the sleep interval is increased to 4 ms, 8 ms, 16 ms, ..., on a doubling basis. When the sleep interval is increased step by step in this way to reach 5 seconds, the next sleep interval is set back to the minimum window value of 2 ms. Thereafter, the subscriber station 911 repeats the process of increasing the sleep interval to 4 ms, 8 ms, 16 ms, ..., on a doubling basis. When the sleep interval is increased step by step to reach the maximum window value again, the sleep interval is again set back to and increased from the minimum window value in the same manner.

In sum, the second embodiment of the present invention provides a method for repeating a process of increasing a sleep interval from a minimum window value if a transition occurs back to a sleep mode after the sleep interval has reached the maximum window value.

### Third Embodiment

As a third embodiment of the present invention, a method for resetting a sleep interval as a new message when the sleep interval reaches a maximum window value will be described with reference to FIGs. 11 and 12.

In a normal situation, a sleep interval reaches a maximum window when there is no data to be transmitted by a base station while the sleep interval is increased on a doubling basis. In this case, because frequency of data that a subscriber station receives can be remarkably reduced, it is preferable to increase a minimum window value and a maximum window value. That is, it is necessary to set a new sleep interval.

FIG. 11 is a diagram illustrating a procedure for requesting setting of a new sleep interval by a subscriber station by transmitting a sleep request message when a sleep interval reaches a maximum window value. As described in the first and second embodiments, a subscriber station 1111 transitions to an awake mode 1119 after the sleep interval reaches a maximum window value 1117, and then transitions to a sleep mode 1127 if negative information is detected from a traffic indication message TRF_IND 1121 received from a base station 1113.

While the subscriber station spontaneously resets the sleep interval in the first and second embodiments, the subscriber station 1111 requests reset of a sleep interval by transmitting a sleep request message SLP_REQ 1123 to the ase station 1113 in the third embodiment. Upon receiving the sleep request message SLP_REQ 1123 from the subscriber station 1111, the base station 1113 sets an appropriate sleep interval and informs the subscriber station 1111 of the set sleep interval through a sleep response message SLP_RSP 1125.

Then the subscriber station 1111 holds a sleep mode 1127 for a new minimum window (NEW MIN-WINDOW) 1129 of a sleep interval included in the received sleep response message 1125 and then transitions back to an awake mode 1131. After transitioning to the awake mode 1131, if the subscriber station 1111 detects negative information through a traffic indication message 1133, the subscriber station 1111 transitions back to a sleep mode 1135. In this case, the sleep interval is set to a value (2*NEW MIN-WINDOW) which is two times the previously set new minimum window value.

Therefore, the subscriber station 1111 in the sleep mode 1135 transitions to an awake mode 1139 after a lapse of a time of the value 1137 which is two times the new minimum window value. In the awake mode 1139, the subscriber station 1111 receives a traffic indication message 1141 from the base station 1113, and if negative information is included in the received traffic indication message 1141, the subscriber station 1111 transitions back to a sleep mode 1143.

Thereafter, the sleep interval is increased step by step by a multiple (2 times, 4 times, 8 times, ...) of the newly set minimum window value. If the sleep interval is increased step by step to reach a newly set maximum window value, the sleep interval can be repeatedly reset to the newly set minimum window value. In an alternative method, if the sleep interval reaches the maximum window value, the sleep interval can be set to other new maximum window and minimum window values. In this case, the subscriber station 1111 must transmit a sleep request message to the base station 1113 in the same manner.

FIG. 12 is a flowchart illustrating a procedure for setting a new sleep interval by a subscriber station by transmitting a sleep request message to a base station when a sleep interval reaches a maximum window value. Referring to FIG. 12, a process performed until an initial sleep interval reaches a maximum window value is identical to a corresponding process described in connection with FIGs. 8 and 10. When the subscriber station 1111 enters a sleep mode, a current sleep frame value is newly set to '0'. The current sleep frame value is increased by one each time a frame elapses at Step 1215, and if the current sleep frame value reaches a currently set sleep interval at Step 1213, the subscriber station 1111 transitions to an awake mode at Step 1217, and receives a signal transmitted by the base station 1113 at Step 1219.

As described above, a signal sent by the base station 1113 includes a traffic indication message, and the traffic indication message includes a signal indicating the presence/absence of data to be transmitted by the base station 1113 to the subscriber station 1111. If there is data to be transmitted by the base station 1113 to the subscriber station 1111, a positive signal is included in the traffic indication message, and the subscriber station 1111 holds an awake mode and performs data transmission/reception at Step 1221.

In contrast, if a negative signal is included in the traffic indication message, the subscriber station 1111 transitions back to a sleep mode. In the third embodiment of the present invention, unlike in the first and second embodiments, when a sleep interval value reaches a maximum window value and a transition occurs back to a sleep mode, the subscriber station 1111 recognizes the necessity to set a new sleep interval and transmits a sleep request message for requesting setting of a new sleep interval to the base station 1113 in the awake mode at Step 1223.

Upon receiving the sleep request message for requesting a new sleep interval from the subscriber station 1111, the base station 1113 transmits a sleep response message including an appropriate new sleep interval to the subscriber station 1111 at Step 1225.

In the third embodiment, like in the second embodiment, because a sleep interval must be increased by a value which is two times the previous sleep interval according to a retry number of a sleep mode, a variable K indicating the retry number of a sleep mode is defined, and the value K is set to '0' when the sleep interval reaches a maximum window value at Step 1229.

The subscriber station 1111 transitions to a sleep mode and then sets a sleep interval not to a previous minimum window value but to a minimum window value newly set through the sleep response message at Step 1231. If the current sleep frame value reaches the new minimum window value at Step 1233, the subscriber station 1111 transitions to an awake mode at Step 1237, and receives a traffic indication message transmitted by the base station 1113 at Step 1239. As stated above, if a negative signal is included in the traffic indication message, the subscriber station 1111 transitions back to a sleep mode at Step 1231, determining that there is no data to be transmitted by the base station 1113.

In this case, because a sleep mode is repeated once again, the value K is set to '1' in setting the sleep interval at Step 1231, and the sleep interval is increased to a value which is two times the new minimum window value received through the sleep response message at Step 1231.

The current sleep frame value is increased with a lapse of a frame at Step 1235, and if the current sleep frame value reaches the currently set sleep interval at Step 1233, the subscriber station 1111 makes a transition from a sleep mode to an awake mode at Step 1237. As described above, after transitioning to the awake mode, the subscriber station 1111 repeats the above process until a positive signal is detected from a traffic indication message.

If the sleep interval reaches the newly set maximum window value again, the subscriber station 1111 transmits a sleep request message for requesting setting of another sleep interval and repeats the above process by applying a new sleep interval included in a received sleep response message.

In an alternative method, the third embodiment of the present invention can be modified. In the modified embodiment, after the sleep interval reaches the maximum window value, if negative information is received through a traffic indication message from the base station 1113, the subscriber station 1111 transmits the sleep request message after setting its sleep interval to the maximum window value and then repeating the process of steps 1211 to 1219 a predetermined number of times, instead of directly transmitting the sleep request message.

In this case, in order to inform the base station 1113 of the retry number through RETRY MAX-WINDOW NUM shown in Table 4 below, the base station 1113 considers the above value when resetting the sleep interval knowing that the sleep interval has reached the maximum window value.

**Table 4**

| SYNTEX | SIZE | NOTES |
|---|---|---|
| SLP-REQ_MESSAGE_FORMAT() { | | |
| MANAGEMENT MESSAGE TYPE=45 | 8 bits | |
| RETRY MAX-WINDOW NUM | 6 bits | |
| MIN-WINDOW | 6 bits | |
| MAX-WINDOW | 10 bits | |
| LISTENING INTERVAL | 8 bits | |
| START TIME | 7 bits | THIS PARAMETER EXISTS ONLY WHEN THE MESSAGE IS SENT BY THE BS |
| } | | |

It is noted from Table 4 that RETRY MAX-WINDOW NUM is added to the conventional sleep request message. That is, if the subscriber station 1111 desires to be allocated new minimum window and maximum window values as its sleep interval has reached the maximum window value, the subscriber station 1111 can transmit the stored repetition count of the maximum window value through the sleep request message of Table 4.

Upon receiving the sleep request message, the base station 1113 assigns new maximum window and minimum window values to the subscriber station 1111 through a sleep response message.

As can be understood from the foregoing description, the present invention sets a sleep interval in several methods in a sleep mode and an awake mode in an OFDM/OFDMA broadband wireless access communication system, or IEEE 802.16e communication system, thereby preventing unnecessary wake-up from a sleep mode, and to contribute to efficient power management.

While the invention has been shown and described with reference to a certain preferred embodiment thereof, it will be understood by those skilled in the art that various changes in form and details may be made therein without departing from the spirit and scope of the invention as defined by the appended claims.

## Claims

1. In a broadband wireless access communication system having a sleep mode in which there is no data to be transmitted or received to/from a base station by a subscriber station, and an awake mode in which there is data to be transmitted or received to/from the base station by the subscriber station, a method for setting a next sleep mode by the subscriber station after a sleep interval between a start time of the sleep mode and a start time of the awake mode has reached a given maximum window value, the method comprising the steps of:
receiving a traffic indication message indicating absence of data to be transmitted from the base station after the start time of the awake mode;
transmitting a sleep request message to the base station;
receiving a response message to the sleep request message from the base station; and
operating in the next sleep mode.

2. The method of claim 1, wherein the response message to the sleep request message includes new minimum window and maximum window values determined by the base station.

3. The method of claim 2, further comprising the step of setting a sleep interval of the next sleep mode to the new minimum window value upon receiving the new minimum window value.

4. The method of claim 3, wherein the sleep interval is set by performing a doubling operation on a previous sleep interval beginning at the new minimum window value when there is no data to be transmitted to the subscriber station after the sleep interval was set to the new minimum window value.

5. The method of claim 1, wherein the traffic indication message is transmitted along with a connection identifier (CID) of the subscriber station when there is data to be transmitted to the subscriber station.

6. The method of claim 1, wherein the sleep interval is set by frames of the data.

7. The method of claim 2, wherein the maximum window value and the minimum window value are previously assigned to the subscriber station by the base station.

8. The method of claim 1, further comprising the steps of:
receiving a message indicating absence of data to be received from the base station in a listening interval after a lapse of a time of the maximum window value;
transitioning to the sleep mode, maintaining the sleep interval for the sleep mode at the maximum window value, and calculating a retry number of the maximum window value;
repeatedly applying the maximum window value to the sleep interval a predetermined number of times, and sending a request for assignment of a new window value to the base station; and
receiving a new window value from the base station.

9. The method of claim 8, wherein the retry number of the maximum window value is transmitted from the subscriber station to the base station.

10. The method of claim 9, wherein the retry number of the maximum window value is a parameter included in the sleep request message.

11. In a broadband wireless access communication system having a sleep mode in which there is no data to be transmitted or received to/from a base station by a subscriber station, and an awake mode in which there is data to be transmitted or received to/from the base station by the subscriber station, a method for setting a next sleep mode by the subscriber station after a sleep interval between a start time of the sleep mode and a start time of the awake mode has reached a given maximum window value, the method comprising the steps of:
receiving a traffic indication message indicating absence of data to be transmitted from the base station after the start time of the awake mode; and
setting a sleep interval for the next sleep mode to a maximum window value, and then operating in the next sleep mode.

12. The method of claim 11, wherein the sleep interval is maintained at the maximum window value when there is no data to be transmitted to the subscriber station after the sleep interval was set to the maximum window value.

13. The method of claim 12, wherein presence/absence of data to be transmitted to the subscriber station is determined through the traffic indication message transmitted from the base station.

14. The method of claim 13, wherein the traffic indication message is transmitted along with a connection identifier (CID) of the subscriber station when there is data to be transmitted to the subscriber station.

15. The method of claim 11, wherein the sleep interval is set by frames of the data.

16. In a broadband wireless access communication system having a sleep mode in which there is no data to be transmitted or received to/from a base station by a subscriber station, and an awake mode in which there is data to be transmitted or received to/from the base station by the subscriber station, a method for setting a next sleep mode by the subscriber station after a sleep interval between a start time of the sleep mode and a start time of the awake mode has reached a given maximum window value, the method comprising the steps of:
receiving a traffic indication message indicating absence of data to be transmitted from the base station after the start time of the awake mode; and
setting a sleep interval for the next sleep mode to a given minimum window value, and then operating in the next sleep mode.

17. The method of claim 16, wherein the sleep interval is set by performing a doubling operation on a previous sleep interval beginning at the minimum window value when there is no data to be transmitted to the subscriber station after the sleep interval was set to the minimum window value.

18. The method of claim 17, wherein presence/absence of data to be transmitted to the subscriber station is determined through the traffic indication message transmitted from the base station.

19. The method of claim 18, wherein the traffic indication message is transmitted along with a connection identifier (CID) of the subscriber station when there is data to be transmitted to the subscriber station.

20. The method of claim 16, wherein the sleep interval is set by frames of the data.

21. The method of claim 16, further comprising the step of setting a next sleep interval to the minimum window value when the sleep interval is increased from the minimum window value on a doubling basis to reach again the maximum window value.
